(19) Europäisches Patentamt
European Patent Office
Office européen des brevets

(11) **EP 0 730 097 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(51) Int Cl.7: **F15B 11/06**

(21) Anmeldenummer: **96100771.3**

(22) Anmeldetag: **19.01.1996**

(54) **Startventil**

Starting valve

Vanne de démarrage

(84) Benannte Vertragsstaaten:
**AT CH DE ES FR GB IT LI NL SE**

(30) Priorität: **28.02.1995 DE 19506974**

(43) Veröffentlichungstag der Anmeldung:
**04.09.1996 Patentblatt 1996/36**

(73) Patentinhaber: **Nass Magnet GmbH**
**30179 Hannover (DE)**

(72) Erfinder: **Hiddessen, Ralf**
**D-30169 Hannover (DE)**

(74) Vertreter: **Tetzner, Michael, Dipl.-Ing. et al**
**Van-Gogh-Strasse 3**
**81479 München (DE)**

(56) Entgegenhaltungen:
**EP-A- 0 097 246     EP-A- 0 328 472**
**DE-A- 4 236 554     FR-A- 2 582 749**
**US-E- R E30 403**

**Beschreibung**

Die Erfindung betrifft ein Startventil zum stufenlosen Druckaufbau in einer druckmitteldurchströmten Anlage gemäß dem Oberbegriff des Anspruches 1.

Beim Wiedereinschalten einer Druckluftanlage, die zuvor abgeschaltet und entlüftet wurde, kann es zu gefährlichen und schädlichen Druckstößen kommen, die eine Beschädigung nachgeschalteter Zylinder zur Folge haben können. Um dies zu verhindern sind sogenannte Startventile zum stufenlosen Druckaufbau entwickelt worden.

Aus der EP-B-0 328 472 ist ein Startventil gemäß dem Oberbegriff des Anspruches 1 bekannt, enthaltend

- ein Gehäuse mit einer ersten Öffnung zur Kopplung mit einem ersten Bauteil der Anlage und einer zweiten Öffnung zur Kopplung mit einem zweiten Bauteil der Anlage,

- einen die beiden Öffnungen verbindenden Kanal,

- einen im Gehäuse zwischen einer Schließ- und einer Öffnungsstellung hin- und herbeweglichen Kolben, der wenigstens eine erste und eine zweite Druckfläche aufweist, wobei an der ersten Druckfläche der im Bereich der ersten Öffnung herrschende Druck und an der zweiten Druckfläche der im Bereich der zweiten Öffnung herrschende Druck anliegt und wobei eine der beiden Druckflächen eine den Kolben in die Öffnungsstellung und die andere Druckfläche eine den Kolben in die Schließstellung drängende Wirkrichtung hat,

- Mittel zur Aufrechterhaltung einer geringen Druckmittelströmung - während der Schließstellung des Kolbens - von der einen zur anderen Öffnung,

- sowie ein den Kolben in die Schließstellung drängendes Federelement.

Bei diesem bekannten Startventil steht die den Kolben in die Schließstellung drängende erste Druckfläche mit der ersten Öffnung in Verbindung, an der der hohe Druck anliegt, so daß der Kolben zunächst in die Schließstellung gebracht wird. Über eine, beispielsweise im Kolben angeordnete Bypassleitung gelangt der hohe Druck allmählich auf die andere Seite und wirkt dort in Verbindung mit der zweiten Druckfläche im Sinne eines Öffnens des Kolbens. Nachdem die zweite Druckfläche flächen-mäßig größer ist als die erste Druckfläche, wird nach einem gewissen Druckausgleich die von der ersten Druckfläche und dem Federelement herrührende Schließkraft überwunden, so daß sich der Kolben langsam in die Öffnungsstellung bewegt.

Durch die entgegengesetzt wirkenden Druckflächen ist dieses Startventil für einen breiten Druckbereich einsetzbar.

Das Prinzip dieses bekannten Startventils erlaubt jedoch nur eine Einbaurichtung in eine bestehende pneumatische Anlage, da der hohe Druck nur an der Öffnung anliegen darf, die mit der Druckfläche in Verbindung steht, die den Kolben in die Schließstellung drängt. Für die zweite Einbauvariante ist daher ein anders gestaltetes Startventil notwendig.

Der Erfindung liegt daher die Aufgabe zugrunde, das Startventil gemäß dem Oberbegriff des Anspruches 1 derart weiterzuentwickeln, daß die Nachteile des Standes der Technik vermieden werden und ein beliebiger Einbau des Startventils ermöglicht wird.

Diese Aufgabe wird erfindungsgemäß durch das kennzeichnende Merkmal des Anspruches 1 gelöst, indem alle Druckflächen eine den Kolben in die Öffnungsstellung drängende Wirkrichtung haben. Weitere Ausgestaltungen der Erfindung sind Gegenstand der Unteransprüche.

In einer besonders vorteilhaften Ausgestaltung sind die erste und die zweite Druckfläche gleich groß ausgestaltet, so daß sich unabhängig von der Einbaurichtung der gleiche Druckaufbau einstellt. Dadurch ist es möglich, lediglich eine Startventilvariante für beide Einbaurichtungen herzustellen. Dies hat neben der kostengünstigen Fertigung auch den Vorteil einer vereinfachten Lagerhaltung.

Weitere Vorteile und Ausgestaltungen der Erfindung werden anhand einiger Ausführungsbeispiele in der Beschreibung und in der Zeichnung näher erläutert.

In der Zeichnung zeigen:

Fig.1a bis 1d     Schnittdarstellungen eines Startventils in der Schließstellung des Kolbens,

Fig.2a bis 2c     Schnittdarstellungen des Startventils gemäß Fig.1 in einer Mittelstellung des Kolbens,

Fig.3a bis 3c     Schnittdarstellungen des Startventils gemäß Fig.1 in der Öffnungsstellung des Kolbens,

Fig.4     Schnittdarstellung des Startventils gemäß einem zweiten Ausführungsbeispiel,

Fig.5a, 5b     Schnittdarstellungen eines Startventils gemäß einem dritten Ausführungsbeispiel,

Fig.6     Schnittdarstellung eines Startventils gemäß einem vierten Ausführungsbeispiel,

Fig.7     Schnittdarstellung eines Startventils gemäß einem fünften Ausführungsbeispiel,

Fig.8a, 8b      Schnittdarstellungen eines Startventils gemäß einem sechsten Ausführungsbeispiel,

Fig.9a, 9b      Schnittdarstellung eines Startventils gemäß einem siebten Ausführungsbeispiel und

Fig.10      Schnittdarstellung eines Startventils gemäß einem achten Ausführungsbeispiel.

In den Fig.1a bis 1d ist ein Startventil 1 gemäß einem ersten Ausführungsbeispiel dargestellt, enthaltend ein durch eine Hohlschraube 2 mit angekoppeltem Ringstutzen 3 gebildetes Gehäuse mit einer ersten Öffnung 4 und einer zweiten Öffnung 5, einen die beiden Öffnungen verbindenden Kanal 6, einen im Gehäuse hin- und herbeweglicher Kolben 7 sowie ein Federelement 8.

Das Startventil 1 wird zum stufenlosen Druckaufbau in einer druckmitteldurchströmten Anlage eingebunden, indem ein erstes Bauteil der Anlage an der ersten Öffnung 4 und ein zweites Bauteil der Anlage an der zweiten Öffnung 5 angekoppelt wird.

Der Kolben 7 weist eine erste Druckfläche 7a auf, die durch eine der ersten Öffnung 4 zugewandten Stirnfläche des Kolbens gebildet wird, so daß an dieser ersten Druckfläche 7a der im Bereich der ersten Öffnung 4 herrschende Druck anliegt. Am Kolben 7 ist ferner eine zweite Druckfläche 7b vorgesehen, an der der im Bereich der zweiten Öffnung 5 herrschende Druck anliegt. Diese zweite Druckfläche 7b wird durch eine ringförmige Erweiterung des Kolbens in einem der ersten Druckfläche 7a gegenüberliegenden Endbereich 7d des Kolbens gebildet.

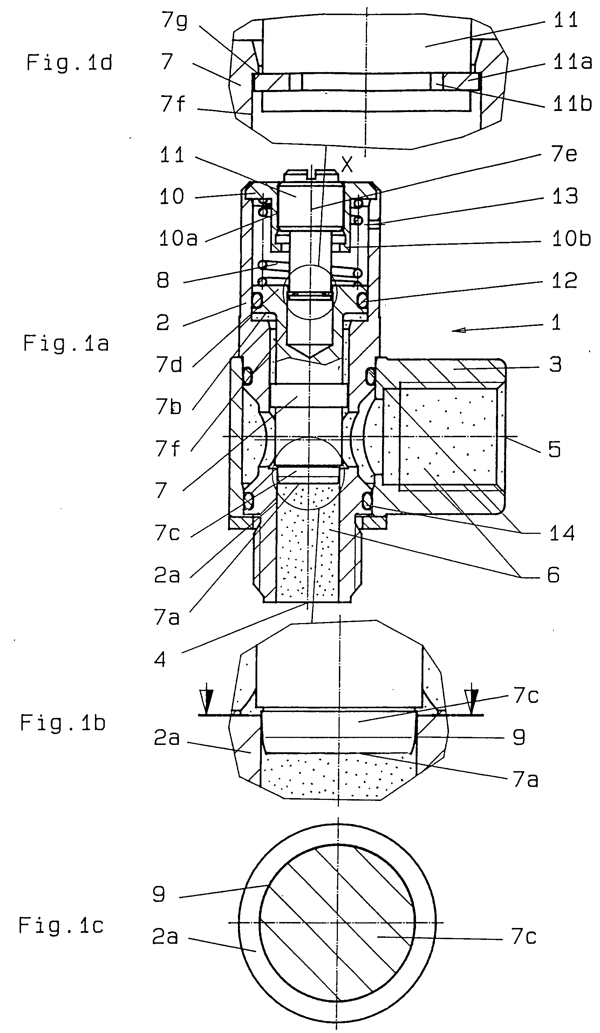

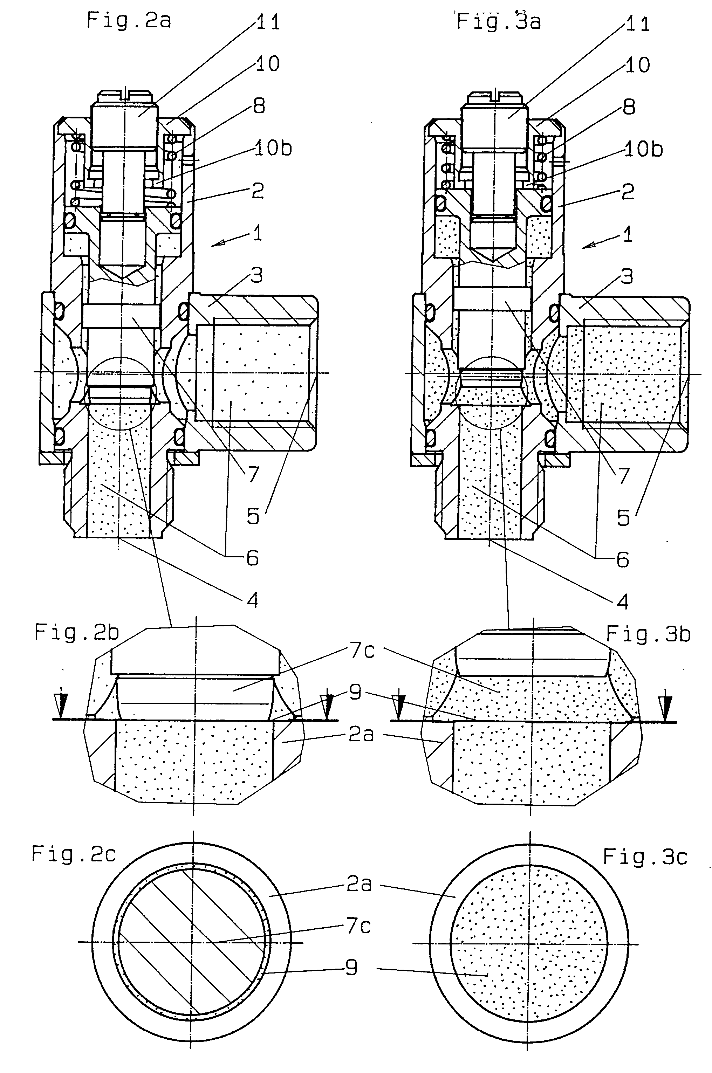

Der Kolben 7 ist in der Hohlschraube 2 zwischen einer in Fig.1 dargestellten Schließstellung und einer in Fig.3a dargestellten Öffnungsstellung hin- und herbeweglich. Es sind ferner Mittel vorgesehen, um eine geringe Druckmittelströmung von der einen zur anderen Öffnung auch während der Schließstellung des Kolbens aufrechtzuerhalten. Diese Mittel werden durch einen ersten Endbereich 7c des Kolbens und einer Wandung des Kanals gebildet, siehe insbesondere Fig.1b. Die Wandung des Kanals wird in diesem Fall durch die Wandung 2a der Hohlschraube 2 gebildet. Zwischen dem ersten Endbereich 7c und der Wandung 2a wird eine Drosselöffnung 9 ausgebildet. In den Fig.1b, 2b und 3b sowie in den Fig.1c, 2c und 3c ist die Drosselöffnung 9 bei verschiedenen Stellungen des Kolbens 7 dargestellt, nämlich in den Fig.1b, 1c in der Schließstellung, in den Fig.2b, 2c in einer Mittelstellung und in den Fig. 3b, 3c in der Öffnungsstellung des Kolbens.

Das Federelement 8 steht im zweiten Endbereich 7d mit dem Kolben 7 in Verbindung und drückt den Kolben in seine Schließstellung. Das Federelement 8 ist koaxial zu der Mittelachse 7e des Kolbens ausgerichtet und stützt sich einerseits am Kolben 7 und andererseits an einem die Hohlschraube 2 verschließenden Verschlußelement 10 ab. Dieses Verschlußelement wird beispielsweise in die Hohlschraube eingepreßt und verstemmt.

Zum Einstellen der Größe der Drosselöffnung 9 in der Schließstellung des Kolbens 7 ist eine Einstellschraube 11 vorgesehen. Die Mittelachse der Einstellschraube 11 fällt zweckmäßigerweise mit der Mittelachse 7e des Kolbens 7 zusammen. Das Verschlußelement 10 weist eine mit einem Innengewinde versehene Bohrung 10a auf, in der die Einstellschraube mit einem entsprechenden Außengewinde geführt ist. Durch Wahl einer geeigneten Gewindesteigung kann die Stellschraube proportional zur Anzahl der Umdrehungen axial, d. h. in Richtung der Mittelachse 7e des Kolbens feinfühlig verstellt werden.

Das mit X gekennzeichnete Detail der Fig.1a ist in der Fig.1d vergrößert dargestellt und zeigt die Verbindung von Kolben 7 und Einstellschraube 11 in der Schließstellung des Kolbens. Im zweiten Endbereich 7d des Kolbens ist eine zentrale Bohrung 7f vorgesehen, in die die Einstellschraube 11 bei der Bewegung des Kolbens in die Öffnungsstellung eintaucht, vgl. Fig.2a und 3a. Während des Betriebes ist die Einstellschraube 11 ortsfest angeordnet, während der Kolben relativ dazu hin- und herbeweglich ist.

Die Drosselöffnung 9 ist dort vorgesehen, wo der Kanal 6 von der Hohlschraube 2 in den Ringstutzen 3 übergeht. Um die Größe der Drosselöffnung 9 durch axiale Verschiebung des Kolbens mit Hilfe der Einstellschraube zu ermöglichen, ist der erste Endbereich 7c des Kolbens 7 konisch ausgebildet.

Läßt man für die folgenden Überlegungen den möglicherweise an den Druckflächen 7a, 7b anliegenden Druck außer acht, so wird der Kolben durch das Federelement 8 in seine Schließstellung gedrängt. Die Größe der kreisringförmigen Drosselöffnung 9 wird durch die axiale Stellung des Kolbens 7 bestimmt. Um nun die kleinste Drosselöffnung festzulegen, ist die Bohrung 7f im Bereich ihrer Öffnung mit einem vorspringenden Absatz 7g versehen, der mit einem Gegenstück 11a an der Einstellschraube 11 in der Schließstellung des Kolbens in Anschlag kommt. Dieses Gegenstück 11a wird beispielsweise durch einen Sprengring gebildet, der in einer entsprechenden Nut 11b am unteren Ende der Einstellschraube 11 gehaltert ist. Soll die Drosselöffnung 9 - in der Schließstellung des Kolbens - vergrößert werden, so geschieht dies durch Drehen der Einstellschraube 11 in entsprechender Richtung, so daß der Kolben 7 über seinen Absatz 7g und das Gegenstück 11a mitgezogen wird. Die Einstellschraube 11 ist für die Verstellung entsprechend ausgebildet, indem sie beispielsweise einen Längsschlitz für die Betätigung mit einem Schraubenzieher aufweist.

Das dem Kolben 7 zugewandte Ende 10b des Verschlußelements 10 dient in der Öffnungsstellung gemäß Fig.3a als oberer Anschlag für den Kolben.

Die im wesentlichen zylindrisch ausgebildete Hohlschraube ist im Bereich der Einstellschraube 11 im Durchmesser an die ringförmige Erweiterung des Kolbens angepaßt. Zwischen der Hohlschraube 2 und dem Kolben 7 ist im Bereich der ringförmigen Erweiterung eine Dichtung 12 vorgesehen. Um in dem oberhalb des Kolbens befindlichen Raum bei der Bewegung des Kolbens einen Druckausgleich zu gewährleisten, ist in der Wandung der Hohlschraube 2 eine entsprechende Entlüftungsbohrung 13 vorhanden. Der Ringstutzen 3 ist ferner über geeignete Dichtungen 14 mit der Hohlschraube 2 gekoppelt.

Im folgenden wird die Funktion des erfindungsgemäßen Startventils näher erläutert:

Nach der Einbindung des Startventils in eine entsprechende Anlage wird die Größe der Drosselöffnung in der Schließstellung des Kolbens durch Verdrehen der Einstellschraube 11 eingestellt. Die Größe der Drosselöffnung hängt dabei vom Volumen der vom Ventil stromabwärts liegenden druckmitteldurchströmten Verbindungen ab. Dies bedeutet, daß bei einem kleinen Volumen auch eine entsprechend kleine Drosselöffnung eingestellt wird.

Zu Beginn des Startvorgangs befindet sich der Kolben 7 in seiner Schließstellung gemäß Fig.1. Liegt beispielsweise der Versorgungsdruck $P_V$ an der ersten Öffnung 4 an, so wirkt am Kolben 7 aufgrund der ersten Druckfläche 7a eine Kraft $F_1$, die der Bedingung

$$F_1 = P_V * A_1$$

entspricht, wobei $A_1$ der Größe der ersten Druckfläche 7a entspricht.

Zu diesem Zeitpunkt herrscht an der zweiten Öffnung 5 ein Nutzdruck $P_N$, der wesentlich kleiner als der Versorgungsdruck $P_V$ ist. Dieser Nutzdruck $P_N$ liegt demzufolge auch an der zweiten Druckfläche 7b an und bewirkt dort eine Kraft $F_2$, die der Bedingung

$$F_2 = P_N * A_2$$

genügt, wobei $A_2$ der Größe der zweiten Druckfläche 7b entspricht. Sowohl die Kraft $F_1$ als auch die Kraft $F_2$ haben eine den Kolben 7 in seine Öffnungsstellung drängende Wirkrichtung. Diesen beiden Kräften wirkt lediglich die Kraft $F_F$ des Federelements 8 entgegen.

Die Federkraft $F_F$ muß so groß sein, daß die Kraft $F_1$ für sich allein noch nicht ausreicht, um den Kolben in die Öffnungsstellung zu bewegen. Über die Drosselöffnung 9 gelangt jedoch der Druck allmählich von der ersten Öffnung 4 zur zweiten Öffnung 5, so daß sich der Nutzdruck $P_N$ allmählich erhöht. In proportionaler Weise erhöht sich die den Kolben in die Öffnungsstellung drängende Kraft. Nach Erreichen des Gleichgewichts der Kräfte $F_1$ und $F_2$ einerseits und der Kraft $F_F$ andererseits beginnt bei einer weiteren Erhöhung des Nutzdrucks $P_N$ eine Verschiebung des Kolbens in die Öffnungsstellung.

Um die Funktion des Startventils zu gewährleisten muß daher die nachfolgende Bedingung erfüllt sein:

$$P_V * (A_1 + A_2) > F_F$$

Wenn sich der Kolben 7 in seiner Öffnungsstellung befindet, ist der Startvorgang abgeschlossen und es gilt die Bedingung

$$P_V = P_N$$

Vorzugsweise wird die Größe der beiden Druckflächen 7a, 7b, d.h. $A_1$ und $A_2$, gleich groß gewählt. Unter Vernachlässigung etwaiger Reibungskräfte funktioniert das Startventil dann auch in analoger Weise, wenn der Versorgungsdruck $P_V$ an der zweiten Öffnung 5 anliegen sollte. Je nach Anwendungsfall kann das Startventil somit mit seiner ersten Öffnung 4 stromauf- oder stromabwärts in die druckmitteldurchströmte Anlage eingebunden werden.

Das Startventil ist in Verbindung mit den verschiedensten Druckmitteln, wie beispielsweise Luft oder Öl, verwendbar.

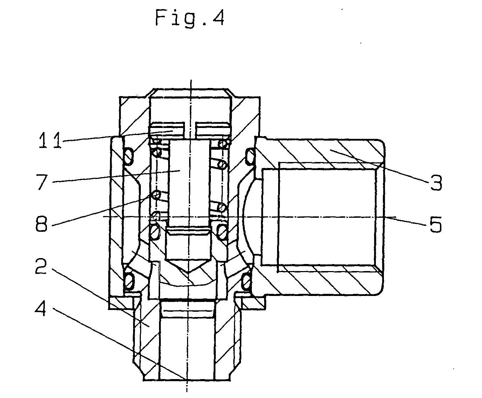

Anhand der Fig.4 bis 9 werden im folgenden weitere Ausführungsbeispiele des erfindungsgemäßen Startventils beschrieben, wobei für Teile gleicher Funktion übereinstimmende Bezugszeichen verwendet werden. Nachdem der Aufbau und die Funktion der weiteren Ausführungsbeispiele größtenteils mit dem ersten Ausführungsbeispiel gemäß den Fig.1 bis 3 vergleichbar ist, wird im folgenden lediglich auf die Unterschiede näher eingegangen.

In der Fig.4 wird ein zweites Ausführungsbeispiel beschrieben, das sich im wesentlichen nur im Bereich der Einstellschraube von dem Startventil gemäß Fig.1 unterscheidet. Bei dem Ausführungsbeispiel wurde auf das Verschlußelement verzichtet, so daß die Einstellschraube 11 über ein an der Hohlschraube 2 vorgesehenen Innengewinde verstellbar ist. Die Einstellschraube 11 dient gleichzeitig als Widerlager für das Federelement 8.

Dieses Ausführungsbeispiel zeichnet sich gegenüber dem Ausführungsbeispiel gemäß den Fig.1 bis 3 durch eine verringerte Anzahl an Bauteilen aus.

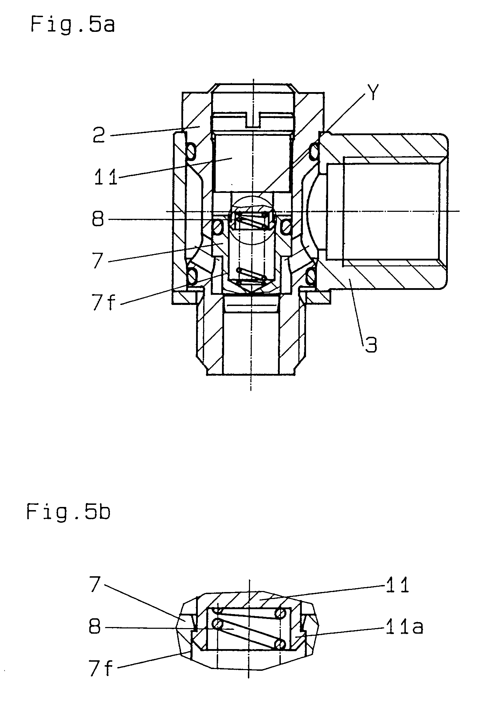

Bei dem in den Fig.5a, 5b dargestellten dritten Ausführungsbeispiel ist die Einstellschraube 11 wiederum direkt in der Hohlschraube 2 geführt. Das Federelement 8 ist jedoch nicht koaxial um die Einstellschraube 11 sondern vielmehr in der Bohrung 7f des Kolbens 7 angeordnet. Das Federelement 8 stützt sich dabei einerseits am Boden der Bohrung 7f und andererseits am unteren Ende der Einstellschraube 11 ab. Das Federelement 8 drückt auch bei diesem Ausführungsbeispiel den Kolben in seine Schließstellung.

Das in Fig.5a dargestellte Detail Y ist in der Fig.5b vergrößert dargestellt und veranschaulicht eine weitere Variante für den Anschlag des Kolbens in der Schließstellung. Das Gegenstück 11a der Einstellschraube 11 ist hier nicht als Sprengring sondern als Schnapphaken ausgebildet.

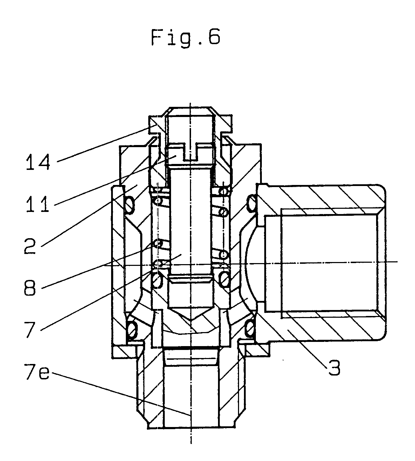

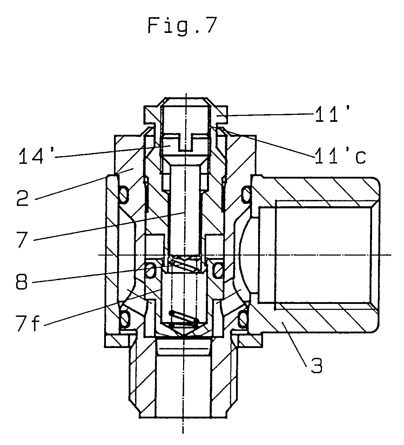

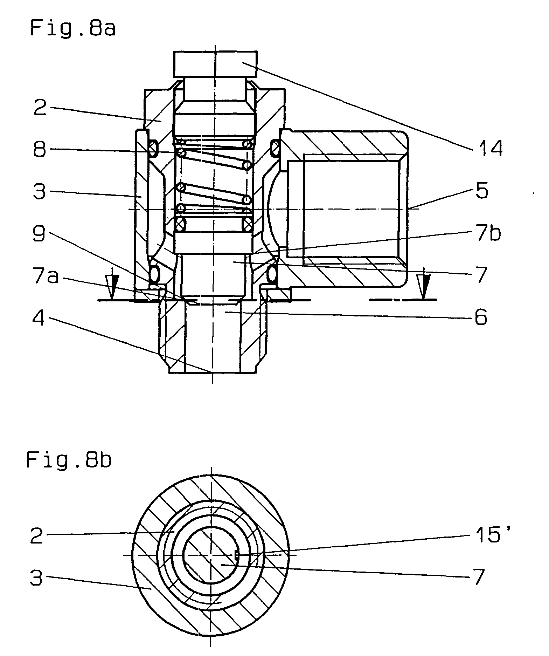

Das vierte Ausführungsbeispiel gemäß Fig.6 entspricht im wesentlichen dem der Fig.1 bis 3, wobei das Verschlußelement 10 als in Richtung der Mittelachse 7e verstellbare Druckeinstellschraube 14 ausgebildet ist. Hierzu weist der aus der Hohlschraube 2 herausragende Teil der Druckeinstellschraube 14 beispielsweise einen Sechskant auf.

Durch die axiale Verstellung der Druckeinstellschraube 14 läßt sich die Federkraft in der Schließstellung des Kolbens verändern, um sie optimal auf den Versorgungsdruck einzustellen. Da die Verstellung der Druckeinstellschraube 14 auch direkt proportional eine Verstellung der Einstellschraube 11 bewirkt, muß stets zunächst der Federdruck durch die Druckeinstellschraube 14 und anschließend die Drosselöffnung durch die Einstellschraube 11 variiert werden.

In Fig.7 ist ein fünftes Ausführungsbeispiel dargestellt, das im wesentlichen eine Kombination der Ausführungsbeispiele gemäß den Fig.5 und 6 darstellt. Hierbei wird die Einstellschraube 11' für die Drosselöffnung mit Hilfe eines Innengewindes in der Hohlschraube 2 geführt. Ferner ist in einer zentralen Bohrung 11'c eine Druckeinstellschraube 14' in einer Gewindeführung gehaltert. Die axiale Verstellung der Druckeinstellschraube 14' bewirkt eine Veränderung der Länge des in der Bohrung 7f angeordneten Federelements.

Für die Einstellung dieser Verschraubung kann wahlweise zunächst der Druck des Federelements oder die Größe der Drosselöffnung verändert werden.

Bei dem in den Fig.8a und 8b dargestellten sechsten Ausführungsbeispiel wird die Regulierung des Startvorganges ausschließlich durch eine Druckeinstellung vorgenommen. In Übereinstimmung mit den Ausführungsbeispielen gemäß Fig.6 und 7 kann durch die Veränderung des Drucks des Federelements 8 mittels der Druckeinstellschraube 14 der Öffnungsdruck festgelegt werden. Bei einer Erhöhung des Drucks des Federelementes 8 wird sich der Kolben 7 langsamer bewegen als bei einer geringeren Vorspannung. Auf diese Weise läßt sich das Startventil für jeden Anwendungsfall individuell einstellen.

Bei diesem Ausführungsbeispiel verschließt der Kolben 7 in der Schließstellung die übliche Verbindung zwischen der ersten und zweiten Öffnung 4, 5. Die Mittel zur Aufrechterhaltung einer geringen Druckmittelströmung während der Schließstellung des Kolbens 7 werden hier durch eine Nut 15' im Kolben gebildet, deren Strömungsquerschnitt festgelegt und damit nicht einstellbar ist.

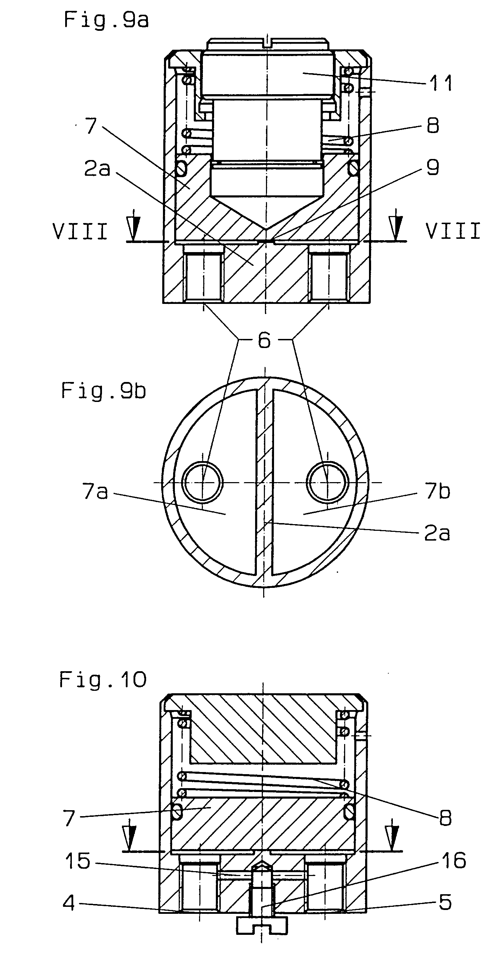

Das in den Fig.9a und 9b dargestellte siebte Ausführungsbeispiel unterscheidet sich von allen vorhergehenden Ausführungsbeispielen dadurch, daß die beiden Teile 6 des Kanals nicht rechtwinklig sondern parallel zueinander angeordnet sind. Im dargestellten Schnitt gemäß Fig.9b längs der Linie VIII-VIII der Fig. 9a sind die beiden Druckflächen 7a und 7b ersichtlich. Die Drosselöffnung 9 wird durch den sich zwischen Kolben 7 und Wandung 2a des Gehäuses bildenden Spalt bestimmt.

Die Verstellung des Drosselspaltes 9 erfolgt gemäß einer der oben beschriebenen Varianten.

Fig.10 zeigt ein achtes Ausführungsbeispiel, das sich vom Ausführungsbeispiel gemäß Fig.9a, 9b lediglich durch die Ausbildung des Drosselspaltes unterscheidet. Bei diesem Ausführungsbeispiel verschließt der Kolben 7 die übliche Verbindung zwischen der ersten und zweiten Öffnung 4, 5. Die Mittel zur Aufrechterhaltung einer geringen Druckmittelströmung während der Schließstellung des Kolbens werden hier durch eine Bypassleitung 15 gebildet, deren Strömungsquerschnitt durch eine Einstellschraube 16 variiert werden kann.

Allen Ausführungsbeispielen ist jedoch gemeinsam, daß die beiden am Kolben 7 ausgebildeten Druckflächen 7a, 7b bei einem anliegenden Druck im Sinne eines Öffnens und lediglich das Federelement 8 im Sinne eines Schließens des Kolbens wirken. Durch die gleich große Ausbildung der beiden Druckflächen kann das Startventil wahlweise mit seiner ersten oder zweiten Öffnung 4, 5 an den Versorgungsdruck angeschlossen werden.

**Patentansprüche**

1. Startventil zum stufenlosen Druckaufbau in einer druckmitteldurchströmten Anlage, enthaltend

    a) ein Gehäuse (2, 3) mit einer ersten Öffnung (4) zur Kopplung mit einem ersten Bauteil der Anlage und einer zweiten Öffnung (5) zur Kopplung mit einem zweiten Bauteil der Anlage,

    b) einen die beiden Öffnungen (4, 5) verbindenden Kanal (6),

    c) einen im Gehäuse zwischen einer Schließ- und einer Öffnungsstellung hin- und herbeweglichen Kolben (7), der wenigstens eine erste und eine zweite Druckfläche (7a, 7b) aufweist, wobei an der ersten Druckfläche (7a) der im Bereich der ersten Öffnung (4) herrschende Druck und an der zweiten Druckfläche (7b) der im Bereich der zweiten Öffnung (5) herrschende Druck anliegt und wobei wenigstens eine der Druckflächen eine den Kolben (7) in die Öffnungsstellung drängende Wirkrichtung hat,

d) Mittel (9,15,15') zur Aufrechterhaltung einer geringen Druckmittelströmung - während der Schließstellung des Kolbens - von der einen zur anderen Öffnung (4,5),

e) ein den Kolben (7) in die Schließstellung drängendes Federelement (8),
dadurch gekennzeichnet, daß

f) alle Druckflächen (7a, 7b) eine den Kolben (7) in die Öffnungsstellung drängende Wirkrichtung haben.

2. Startventil nach Anspruch 1, dadurch gekennzeichnet, daß die erste und zweite Druckfläche (7a, 7b) gleich groß sind.

3. Startventil nach Anspruch 1, dadurch gekennzeichnet, daß die Mittel zur Aufrechterhaltung einer geringen Druckmittelströmung durch einen ersten Endbereich (7c) des Kolbens (7) und eine Wandung (2a) des Kanals (6) gebildet werden, wobei sich zwischen Endbereich des Kolbens und der Wandung eine Drosselöffnung (9; Nut 15') ausbildet.

4. Startventil nach Anspruch 3, dadurch gekennzeichnet, daß ein Mittel zur Einstellung der Größe der Drosselöffnung (9) in der Schließstellung des Kolbens (7) vorgesehen ist.

5. Startventil nach Anspruch 4, dadurch gekennzeichnet, daß das Einstellmittel durch eine Einstellschraube (11, 11') gebildet wird, die zumindest die Bewegung des Kolbens in Richtung der Schließstellung begrenzt.

6. Startventil nach Anspruch 5, dadurch gekennzeichnet, daß der Kolben relativ zur Einstellschraube (11, 11') beweglich ist.

7. Startventil nach Anspruch 5, dadurch gekennzeichnet, daß der Kolben (7) und die Einstellschraube (11, 11') eine gemeinsame Mittelachse (7e) aufweisen.

8. Startventil nach Anspruch 5, dadurch gekennzeichnet, daß das Federelement (8) koaxial zur Einstellschraube (11) angeordnet ist.

9. Startventil nach Anspruch 5, dadurch gekennzeichnet, daß ein zweiter Endbereich (7d) des Kolbens (7) eine zentrale Bohrung (7f) aufweist, in die die Einstellschraube (11) bei der Bewegung des Kolbens in die Öffnungsstellung eintaucht.

10. Startventil nach Anspruch 9, dadurch gekennzeichnet, daß die Bohrung (7f) im Bereich ihrer Öffnung einen vorspringenden Absatz (7g) aufweist, der mit

einem Gegenstück (11a) an der Einstellschraube (11) in der Schließstellung des Kolbens (7) in Anschlag kommt.

11. Startventil nach Anspruch 7, dadurch gekennzeichnet, daß die Einstellschraube (11) zur Regulierung der Drosselöffnung (9) in Richtung der Mittelachse (7a) verstellbar ist.

12. Startventil nach Anspruch 1, dadurch gekennzeichnet, daß die erste Druckfläche (7a) durch eine Stirnfläche und die zweite Druckfläche (7b) durch eine Fläche einer ringförmigen Erweiterung des Kolbens gebildet werden.

13. Startventil nach Anspruch 3, dadurch gekennzeichnet, daß der Kolben im ersten Endbereich (7c) zur Regulierung der Drosselöffnung (9) konisch ausgebildet ist.

14. Startventil nach Anspruch 1, dadurch gekennzeichnet, daß das Gehäuse durch eine Hohlschraube (2) mit angekoppeltem Ringstutzen (3) gebildet wird, wobei der Kolben (7) und die erste Öffnung (4) in der Hohlschraube (2) vorgesehen sind, während der Ringstutzen die zweite Öffnung (5) aufweist.

15. Startventil nach Anspruch 14, dadurch gekennzeichnet, daß der Kanal (6) zwischen Hohlschraube (2) und Ringstutzen (3) etwa rechtwinklig abgeknickt ist.

16. Startventil nach Anspruch 1, dadurch gekennzeichnet, daß Mittel (10, 14, 14') zur Einstellung der Federkraft des Federelements (8) vorgesehen sind.

17. Startventil nach Anspruch 16, dadurch gekennzeichnet, daß das Mittel zur Einstellung der Federkraft des Federelements (8) durch eine im Gehäuse geführte Druck-Einstellschraube (14, 14') gebildet wird, die mit dem Federelement (8) an dessen, dem Kolben (7) gegenüberliegenden Ende in Kontakt steht.

**Claims**

1. Starting valve for the stepless pressure build-up in an apparatus which allows the passage of pressure media, containing

    a) a housing (2, 3) having a first opening (4) for coupling to a first component of the apparatus and a second opening (5) for coupling to a second component of the apparatus,

    b) a duct (6) which connects the two openings (4, 5),

c) a piston (7) which can be moved back and forth in the housing between a closed and an open position and which has at least a first and a second pressing face (7a, 7b), the pressure within the region of the first opening (4) being applied to the first pressing face (7a) and the pressure present in the region of the second opening (5) being applied to the second pressing face (7b) and at least one of the pressing faces having an effective direction which urges the piston (7) into the open position,

d) means (9, 15, 15') for maintaining a small flow of pressure media - during the closed position of the piston

-   from one opening to the other (4, 5),

e) a resilient element (8) which urges the piston (7) into the closed position,
        characterised in that

f) all of the pressing faces (7a, 7b) have an effective direction which urges the piston (7) into the open position.

2.  Starting valve according to claim 1, characterised in that the first and second pressing faces (7a, 7b) are of identical size.

3.  Starting valve according to claim 1, characterised in that the means for maintaining a small flow of pressure media are formed by a first end region (7c) of the piston (7) and a wall (2a) of the duct (6), a throttle opening (9; slot 15') being formed between the end region of the piston and the wall.

4.  Starting valve according to claim 3, characterised in that there is provided a means for adjusting the size of the throttle opening (9) in the closed position of the piston (7).

5.  Starting valve according to claim 4, characterised in that the adjusting means is formed by an adjusting screw (11, 11') which limits at least the movement of the piston in the direction of the closed position.

6.  Starting valve according to claim 5, characterised in that the piston is movable relative to the adjusting screw (11, 11').

7.  Starting valve according to claim 5, characterised in that the piston (7) and the adjusting screw (11, 11') have a common centre axis (7e).

8.  Starting valve according to claim 5, characterised in that the resilient element (8) is arranged coaxially with the adjustment screw (11).

9.  Starting valve according to claim 5, characterised in that a second end region (7d) of the piston (7) has a central drilled hole (7f) into which the adjustment screw (11) enters when the piston moves into the open position.

10. Starting valve according to claim 9, characterised in that the drilled hole (7f) has, in the region of the opening thereof, a projecting shoulder (7g) which is stopped by a counter-element (11a) on the adjustment screw (11) in the closed position of the piston (7).

11. Starting valve according to claim 7, characterised in that the adjustment screw (11) for regulating the throttle opening (9) is adjustable in the direction of the centre axis (7a).

12. Starting valve according to claim 1, characterised in that the first pressing face (7a) is formed by an end face and the second pressing face (7b) by a face of an annular widening of the piston.

13. Starting valve according to claim 3, characterised in that the piston is of conical shape in the first end region (7c) for regulating the throttle opening (9).

14. Starting valve according to claim 1, characterised in that the housing is formed by a hollow bolt (2) with a coupled-on annular connection piece (3) , the piston (7) and the first opening (4) being provided in the hollow bolt (2), whereas the annular connection piece has the second opening (5) .

15. Starting valve according to claim 14, characterised in that the duct (6) between the hollow bolt (2) and the annular connection piece (3) is bent over approximately at right-angles.

16. Starting valve according to claim 1, characterised in that means (10, 14, 14') for adjusting the resilient force of the resilient element (8) are provided.

17. Starting valve according to claim 16, characterised in that the means for adjusting the resilient force of the resilient element (8) are formed by a pressure-adjustment screw (14, 14'), which is-guided in the housing and which is in contact with the resilient element (8) at the end thereof that is opposite the piston (7).

**Revendications**

1.  Vanne de démarrage pour l'établissement progressif d'une pression dans une installation parcourue par un fluide sous pression contenant:

    a) un boîtier (2, 3) comportant une première ouverture (4) pour l'accouplement à un premier composant de l'installation et une seconde ouverture (5) pour l'accouplement à un second composant de l'installation,
b) un canal (6) reliant les deux ouvertures (4, 5),
c) un piston (7), qui est déplaçable en va-et-vient dans le boîtier entre une position de fermeture et une position d'ouverture et qui possède au moins des première et seconde surfaces de pression (7a, 7b), la pression régnant au niveau de la première ouverture (4) étant appliquée à la première surface de pression (7a), et la pression régnant au niveau de la seconde ouverture (5) s'appliquant à la seconde surface de pression (7b), et au moins l'une des surfaces de pression possédant une direction d'action qui refoule le piston (7) dans la position d'ouverture,
d) des moyens (9, 15, 15') servant à maintenir un faible écoulement de fluide sous pression - alors que le piston est dans la position de fermeture - depuis une ouverture en direction de l'autre ouverture (4, 5),
e) un élément de ressort (8) qui repousse le piston (16) dans la position de fermeture, caractérisée en ce que
f) toutes les surfaces de pression (7a, 7b) ont une direction d'action qui repousse le piston (7) dans sa position d'ouverture.

**2.** Vanne de démarrage selon la revendication 1, caractérisée en ce que les première et seconde surfaces de pression (7a, 7b) ont des étendues identiques.

**3.** Vanne de démarrage selon la revendication 1, caractérisée en ce que les moyens servant à maintenir un faible écoulement de fluide sous pression sont formés par une première partie d'extrémité (7a) du piston (7) et une paroi (2a) du canal (6), une ouverture d'étranglement (9; rainure 15') s'établissant entre une partie d'extrémité du piston et la paroi.

**4.** Vanne de démarrage selon la revendication 3, caractérisée en ce que des moyens sont prévus pour régler la taille de l'ouverture d'étranglement (9) lorsque le piston (7) est dans la position de fermeture.

**5.** Vanne de démarrage selon la revendication 4, caractérisé en ce que les moyens de réglage sont formés par une vis de réglage (11, 11'), qui limite au moins le déplacement du piston en direction de la position de fermeture.

**6.** Vanne de démarrage selon la revendication 5, caractérisée en ce que le piston est déplaçable par rapport à la vis de réglage (11, 11').

**7.** Vanne de démarrage selon la revendication 5, caractérisée en ce que le piston (7) et la vis de réglage (11, 11') possèdent un axe médian commun (7e).

**8.** Vanne de démarrage selon la revendication 5, caractérisée en ce que l'élément de ressort (8) est monté coaxialement à la vis de réglage (11).

**9.** Vanne de démarrage selon la revendication 5, caractérisée en ce qu'une seconde partie d'extrémité (7a) du piston (7) possède un perçage centrale (7f) dans lequel la vis de réglage (11) pénètre lors du déplacement du piston venant dans la position d'ouverture.

**10.** Vanne de démarrage selon la revendication 9, caractérisée en ce que le perçage (7f) possède, dans la zone de son ouverture, un épaulement saillant (7g), qui vient s'appliquer contre une pièce antagoniste (11a) située sur la vis de réglage (11) lorsque le piston (7) est dans la position de fermeture.

**11.** Vanne de démarrage selon la revendication 7, caractérisée en ce que la vis de réglage (11) est déplaçable dans la direction de l'axe médian (7a), pour régler l'ouverture d'étranglement (9).

**12.** Vanne de démarrage selon la revendication 1, caractérisée en ce que la première surface de pression (7a) est formée par une surface frontale et que la seconde surface de pression (7b) est formée par une surface d'un prolongement de forme annulaire du piston.

**13.** Vanne de démarrage selon la revendication 3, caractérisée en ce que le piston est agencé avec une forme conique dans la première partie d'extrémité (7a) pour la régulation de l'ouverture d'étranglement (9).

**14.** Vanne de démarrage selon la revendication 1, caractérisée en ce que le boîtier est formé par une vis évidée (2) à laquelle est couplée une tubulaire annulaire (3), le piston (7) et la première ouverture (4) étant prévus dans la vis évidée (2) tandis que la tubulure annulaire possède la seconde ouverture (5).

**15.** Vanne de démarrage selon la revendication 14, caractérisée en ce que le canal (6) est coudée approximativement à angle droit entre la vis évidée (10) et la tubulure annulaire (3).

**16.** Vanne de démarrage selon la revendication 15, caractérisée en ce que

**17.** Vanne de démarrage selon la revendication 16, caractérisée en ce que les moyens de réglage de la force de l'élément de ressort (8) sont formés par une vis de réglage de pression (14, 14') guidée dans le boîtier et qui est en contact avec l'élément de ressort (8) au niveau de l'extrémité de cet élément située à l'opposé du piston (7).

Fig.1d

Fig.1a

Fig.1b

Fig.1c

Fig.2a

11
10
8
10b
2
1
3
7
5
6
4

Fig.3a

11
10
8
10b
2
1
3
7
5
6
4

Fig.2b

7c
9
2a

Fig.3b

7c
9
2a

Fig.2c

2a
7c
9

Fig.3c

2a
9

Fig.4

11

7

8

2

4

3

5

Fig.5a

2

11

8

7

7f

Y

3

Fig.5b

7

8

7f

11

11a

Fig.6

Fig.7

Fig.8a

Fig.8b

Fig.9a

11

7

8

2a

9

VIII                    VIII

6

Fig.9b

7a                    7b

2a

Fig.10

7

8

15                    16

4                    5